(19) Europäisches Patentamt
European Patent Office
Office européen des brevets

(11) Veröffentlichungsnummer: **0 650 004 A1**

(12) # EUROPÄISCHE PATENTANMELDUNG

(21) Anmeldenummer: **94100431.9**

(22) Anmeldetag: **13.01.94**

(51) Int. Cl.[6]: **F16L 9/12**, B32B 27/34, B32B 1/08, F16L 11/04, C08L 77/00, C08L 33/24, //(C08L77/00,33:24)

(30) Priorität: **25.10.93 DE 4336289**

(43) Veröffentlichungstag der Anmeldung: **26.04.95 Patentblatt 95/17**

(84) Benannte Vertragsstaaten: **CH DE ES FR GB IT LI NL SE**

(71) Anmelder: **HÜLS AKTIENGESELLSCHAFT**

**D-45764 Marl (DE)**

(72) Erfinder: **Röber, Stefan, Dr.**
**Max-Reger-Strasse 138**
**D-45772 Marl (DE)**
Erfinder: **Jadamus, Hans, Dr.**
**Hervester Strasse 8**
**D-45768 Marl (DE)**
Erfinder: **Böer, Michael**
**Lohhäuser Strasse 2**
**D-45739 Oer-Erkenschwick (DE)**
Erfinder: **Feinauer, Roland, Dr.**
**Flämingstrasse 34**
**D-45770 Marl (DE)**
Erfinder: **Herrmann, Hans-Dieter**
**Pommernstrasse 9**
**D-45770 Marl (DE)**
Erfinder: **Ries, Hans, Dr.**
**Begonienstrasse 9**
**D-45772 Marl (DE)**

(54) **Mehrschichtiges Kunststoffrohr.**

(57) Es soll ein Kunststoffrohr mit verbesserter Beständigkeit u. a. gegen methanolhaltige Kraftstoffe und verbesserten mechanischen Eigenschaften zur Verfügung gestellt werden.

Dies wird erreicht durch ein mehrschichtiges Kunststoffrohr zumindest bestehend aus

I. einer Außenschicht aus einer Formmasse auf Basis von Polyamid,

II. einer zur Außenschicht benachbarten Zwischenschicht aus einer Formmasse auf Basis eines Gemisches aus

a. 95 bis 99 Gew.-% eines linearen, kristallinen Polyesters

und

b. 1 bis 5 Gew.-% einer mindestens zwei Isocyanatgruppen aufweisenden Verbindung,

wobei die der Komponente II.b. entstammmenden Isocyanatgruppen in dem Gemisch aus II.a. und II.b. in einer Konzentration von 0,03 bis 0,3 Gew.-% enthalten sind,

III. einer Zwischenschicht aus einer Formmasse auf Basis von Polyamid,

IV. einer zur Innenschicht benachbarten Zwischenschicht aus einer Formmasse auf Basis eines Gemisches aus

a. 50 bis 90 Gew.-% eines Polyamids

und

b. 10 bis 50 Gew.-% eines Poly(alkyl)acrylsäureesters

V. einer Innenschicht aus einer Formmasse auf Basis von Polyvinylidenfluorid,

wobei die jeweils benachbarten Schichten kraftschlüssig miteinander verbunden sind.

Mit Hilfe der Erfindung gelingt es, Kunststoffrohre mit dem gewünschten verbesserten Eigenschaftsbild zu erhalten.

EP 0 650 004 A1

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile, wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In FR-PS 2 602 515 wird ein zweischichtiges Rohr mit einer Außenschicht aus Polyamid 11 und einer inneren Schicht aus weichgemachtem Polyvinylidenfluorid beschrieben. Untersuchungen haben jedoch gezeigt, daß die Sperrwirkung gegenüber dem durchfließendem Medium nicht befriedigt.

Ferner wird in DE-PS 38 27 092 ein mehrschichtiges Kunststoffrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist dem Fachmann bekannt, daß die weitaus meisten Polymere, so auch Polyamide und Polyester, miteinander unverträglich sind, weshalb bei der Herstellung von Mehrschichtverbunden keine Haftung zwischen den Laminatschichten erreicht wird. Ein kraftschlüssiger Verbund zwischen den einzelnen Polymerschichten ist bei technischen Anwendungen unbedingt erforderlich.

Vor allem die Permeation von methanolhaltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Aufgabe der Erfindung war es, ein Polyamidrohr mit einer guten Sperrwirkung gegen das transportierte Medium, vor allem gegenüber methanolhaltigen Kraftstoffen, einer zufriedenstellenden Maßhaltigkeit, z. B. bei hohen und tiefen Temperaturen, sowie einer befriedigenden mechanischen Belastbarkeit zu entwickeln.

Diese Aufgabe wird gelöst durch ein mehrschichtiges Kunststoffrohr mindestens bestehend aus

I. einer Außenschicht aus einer Formmasse auf Basis von Polyamid,

II. einer zur Außenschicht benachbarten Zwischenschicht aus einer Formmasse auf Basis eines Gemisches aus

a. 95 bis 99 Gew.-% eines linearen, kristallinen Polyesters

und

b. 1 bis 5 Gew.-% einer mindestens zwei Isocyanatgruppen aufweisenden Verbindung,

wobei die der Komponente II.b. entstammmenden Isocyanatgruppen in dem Gemisch aus II.a. und II.b. in einer Konzentration von 0,03 bis 0,3 Gew.-% enthalten sind,

III. einer Zwischenschicht aus einer Formmasse auf Basis von Polyamid,

IV. einer zur Innenschicht benachbarten Zwischenschicht aus einer Formmasse auf Basis eines Gemisches aus

a. 50 bis 90 Gew.-% eines Polyamids

und

b. 10 bis 50 Gew.-% eines Poly(alkyl)acrylsäureesters

V. einer Innenschicht aus einer Formmasse auf Basis von Polyvinylidenfluorid,

wobei die jeweils benachbarten Schichten kraftschlüssig miteinander verbunden sind.

Für die Außenschicht gemäß I. sowie für die Komponenten III. und IV.a. kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer $\alpha$, -Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Wiley & Sons (1982), S. 328 und 435, beschrieben werden. Als Polyamide geeignete Polykondensate sind gleichfalls Poly-(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität ($\eta_{rel}$) im Bereich von 1,5 bis 2,8.

Als Polyamide für die Komponenten gemäß I., III. bzw. IV.a. können gleiche oder unterschiedliche Polyamid-Typen gewählt werden.

Bevorzugt für die Schichten gemäß I. und III. sind Polyamide, die ≧ 50 % Aminoendgruppen, insbesondere > 80 % Aminoendgruppen, enthalten.

Die linearen, kristallinen Polyester (Komponente II.a.) weisen nachstehende Grundstruktur auf

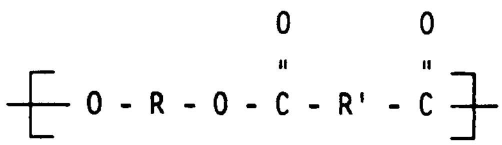 ;

dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel

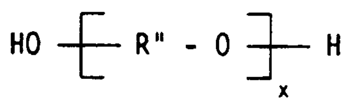 ,

wobei R'' einen zweiwertigen Rest mit 2 bis 4 C-Atomen bedeutet und x einen Wert von 2 bis 50 annehmen kann, ersetzt sein.

Bevorzugt als Diole werden Diethylenglykol und insbesondere Dibuthylen-glykol eingesetzt.

Als aromatische Dicarbonsäuren kommen z. B. Terephthalsäure, Isophthalsäure, 1.4-, 1.5-, 2.6- bzw. 2.7-Naphthalindicarbonsäure, Diphensäure, Diphenyl-ether-4.4'-dicarbonsäure in Frage. Terephthalsäure ist bevorzugt.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 $cm^3/g$ auf.

Die Polyamide der Außenschicht gemäß I. bzw. der Zwischenschicht III., der Komponente IV.a. und die Polyester der Komponente II.a. können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien- (Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisate (**Ullmanns Encyclopädie der technischen Chemie**, 4. Auflage, Bd. 19, Verlag Chemie

Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Modifier sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat, Butadien- oder Styrol/Butadien-Kautschuk mit Glastemperaturen $T_g < -10$ °C, wobei der Kern vernetzt sein kann. Die Schale kann aus Styrol und/oder Methylmethacrylat und/oder weiteren ungeshttigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Als Komponente II.b. können Verbindungen eingesetzt werden, die mindestens zwei Isocyanatgruppen tragen. Als solche eignen sich insbesondere aromatische und (cyclo-)aliphatische Isocyanate wie beispielsweise 1,4-Phenylendiisocyanat, 2,4- Toluylendiisocyanat, 2,6-Toluylendiisocyanat, 1,5-Naphthylendiisocyanat, 1,6-Hexamethylendiisocyanat, Diphenylmethan-2,4-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat, Hexahydro-1,4-phenylendiisocyanat, Norbonandiisocyanat, p- oder m-Xylylendiisocyanate, Perhydro-2,4-diphenylmethandiisocyanat und Perhydro-4,4'-di-phenylmethandiisocyanat.

Als Komponente II.b. haben sich besonders vorteilhaft Isophorondiisocyanat sowie Umsetzungsprokukte davon mit sich selbst sowie mit geeigneten Reaktanten, wie z. B. $\alpha,\omega$-Diole mit 2 - 10 C-Atomen in der Kohlenstoffkette erwiesen.

Bevorzugte Umsetzungsprodukte ergeben sich beispielsweise aus der Reaktion mindestens zweier Moleküle Isophorondiisocyanat, wobei die Anbindung durch Reaktion von jeweils zwei Isocyanatgruppen unter Ausbildung einer Biuretgruppe erfolgt.

Weitere vorteilhafte Umsetzungsprodukte werden beispielsweise durch Umsetzung von jeweils zwei Isophorondiisocyanat-Molekülen mit einem Molekül Diol erhalten, wobei jeweils eine Isocyanatgruppe des Isophorondiisocyanats mit einer der Hydroxylgruppen des Diols eine Urethanbindung ausbildet. Beispiele für besonders gut geeignete Diole sind Butandiol und Diethylenglykol.

Gleichfalls als Komponente II.b. können Verbindungen eingesetzt werden, die mehr als zwei und bevorzugt genau drei Isocyanatgruppen enthalten. Als solche eignen sich beispielsweise Triphenylmethan-4.4'.4''-triisocyanat, weiterhin Umsetzungsprodukte aus den zu Komponente II.b.1. weiter oben aufgeführten Diisocananten, insbesondere Triisocyanurate dieser Diisocyanate, wie beispielsweise das Triisocyanurat, das aus Umsetzung von jeweils drei Molekülen Hexamethylendiisocyanat entsteht. Besonders bevorzugt ist das Triisocyanurat, das durch Umsetzung von jeweils drei Molekülen Isophorondiisocyanat entsteht.

Die Isocyanatgruppen der Komponente II.b. können blockiert vorliegen. Die Blockierung von Isocyanatgruppen ist bekannt (z. B. **Paint Resin** 58 (1988) 5, 18-19). Beispielsweise sei eine Blockierung durch Umsetzung der Isocyanatgruppen mit Diolen, Pyrazolen, Oximen, insbesondere Ketoximen, sowie Lactamen, insbesondere Caprolactam, angeführt.

Als Komponente II.b. werden bevorzugt Gemische aus einer zwei Isocyanatgruppen und einer mehr als zwei Isocyanatgruppen aufweisenden Verbindung eingesetzt. Das Molverhältnis von zwei Isocyanatgruppen zu mehr als zwei Isocyanatgruppen aufweisenden Verbindung liegt im Bereich von 20 bis 80 zu 80 bis 20, vorzugsweise von 40 bis 50 zu 60 bis 50.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 200 und 300 °C.

Bei der Herstellung der Formmasse für die Schicht gemäß II. können die bei der Verarbeitung von Isocyanaten üblichen und bekannten Katalysatoren eingesetzt werden.

Die Formmasse für die Schicht gemäß II. sollte vor der Herstellung der mehrschichtigen Rohre trocken und unter Ausschluß von Luftfeuchtigkeit gelagert werden.

Die oben beschriebene Herstellung der Formmasse für die Schicht gemäß II. kann auch direkt in einem Speiseextruder der zur Herstellung der mehrschichtigen Rohre verwendeten Coextrusionsanlage oder Spritzgußanlage erfolgen, so daß die Formmasse für die Schicht gemäß II. direkt im Anschluß an ihre Herstellung - ohne weitere Zwischenlagerung - zu einer Schicht des mehrschichtigen Rohres verarbeitet werden kann. Im Falle der Coextrusion sind die Verarbeitungsbedingungen bei der Herstellung der mehrschichtigen Rohre so zu wählen, daß die Schmelzen mit ausreichend hohem Druck aufeinander gelegt

werden.

Die Formmasse für die Zwischenschicht gemäß II. enthält zu 95 bis 99 Gew.-%, vorzugsweise zu 96 bis 98 Gew.-%, Polyester und zu 1 bis 5 Gew.-%, vorzugsweise 2 bis 4 Gew.-%, Isocyanatgruppen aufweisende Verbindungen.

Es werden soviel Isocyanatgruppen aufweisende Verbindungen eingesetzt, daß in dem Gemisch aus den Komponenten II.a. und II.b. die Isocyanatgruppenkonzentration im Bereich von 0,03 bis 0,3 Gew.-%, vorzugsweise im Bereich von 0,04 bis 0,2 Gew.-%, liegt.

Neben Polyamid als Komponente IV.a. enthält die Zwischenschicht gemäß IV. noch die Komponente IV.b. Als Komponente IV.b. werden Poly(alkyl)acrylsäureester oder ihre Derivate mit 1 bis 6 C-Atomen in der Kohlenstoffkette des Alkylrestes bzw. des Alkohols eingesetzt, wobei die Methylgruppe bevorzugt ist.

Als Beispiele seien u. a. Polymethylmethacrylat, Polybutylmethacrylat genannt.

Es können aber auch Copolymere der Poly(alkyl)acrylsäureester zum Einsatz kommen. So können bis zu 50 Gew.-%, vorzugsweise von 5 bis 30 Gew.-%, des Alkyl(meth)acrylates durch andere Monomere wie z. B. (Meth)acrylsäure, Hexyl(meth)acrylat, Styrol, Maleinsäureanhydrid o. ä. ersetzt sein. Bevorzugt sind Copolymere aus Methyl(meth)acrylat mit einem Anteil von < 30 Gew.-%, vorzugsweise von 12 bis 18 Gew.-%, Styrol und von ≦ 20 Gew.-%, vorzugsweise von 8 bis 12 Gew.-%, Maleinsäureanhydrid.

Des weiteren können als Derivate der Poly(alkyl)acrylsäureester Polymere eingesetzt werden, welche nachstehende Grundbausteine aufweisen:

i) < 100 Gew.-%, vorzugsweise
6,5 bis 60 Gew.-%

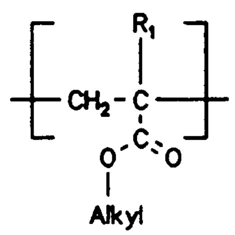

ii) < 100 Gew.-%, vorzugsweise
20 bis 90 Gew.-%

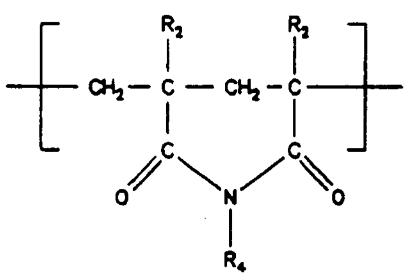

iii) < 20 Gew-%, vorzugsweise
2 bis 15 Gew.-%

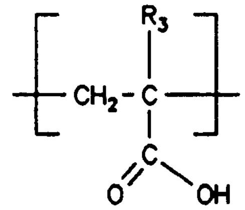

iv) < 20 Gew.-%, vorzugsweise
1,5 bis 12 Gew.-%

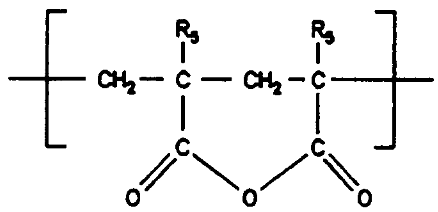

In den genannten Formeln bedeuten
Alkyl = Methyl, Ethyl, Propyl, Butyl, Hexyl
$R_1$ bis $R_5$ = -H, -($C_nH_{2n+1}$)
n = 1 bis 6,
wobei die Substituenten gleich oder verschieden sein können. Bevorzugt sind solche Grundbausteine, in denen $R_1$ bis $R_5$ einen Methylrest bedeuten.

Die zuletzt genannten Polymeren werden auch als Polyglutarimide bezeichnet, da es sich um Poly(alkyl)acrylsäureester handelt, bei denen zwei benachbarte Carboxylatgruppen zu einem cyclischen Säureimid umgesetzt worden sind. Die Imidbildung wird bevorzugt mit Ammoniak bzw. primären Aminen, wie z. B. mit Methylamin, durchgeführt. Die Produkte sowie ihre Herstellung sind bekannt (Hans R. Kricheldorf, **Handbook of Polymer Synthesis**, Part A, Verlag Marcel Dekker Inc. New York - Basel - Hongkong, S. 223 f.; H. G. Elias, **Makromoleküle**, Hüthig und Wepf Verlag Basel - Heidelberg - New York; US-PSS 2 146 209, 4 246 374).

Die Poly(alkyl)acrylsäureester weisen einen Melt flow-Index von < 30 g/10 min., vorzugsweise von 0,3 bis 15 g/10 min., auf.

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Die Herstellung der Formmasse für die Schicht gemäß IV. erfolgt nach üblichen und bekannten Verfahren durch Schmelzemischen der Komponenten IV.a. und IV.b. in einem gut knetenden Mischaggregat, wie z. B. einem Doppelschneckenkneter, bei Temperaturen, die sich nach den Schmelzpunkten der Komponenten IV.a. und IV.b. richten, im allgemeinen bei Temperaturen zwischen 230 und 330 °C.

Die Herstellung der Formmasse für die Schicht gemäß IV. kann auch direkt in einem Speiseextruder, der zur Herstellung der mehrschichtigen Rohre in der verwendeten Coextrusionsanlage oder Spritzgußanlage eingesetzt ist, erfolgen, so daß die Formmasse für die Schicht gemäß IV. direkt im Anschluß an ihre Herstellung - ohne weitere Zwischenlagerung - zu einer Schicht des mehrschichtigen Rohres verarbeitet werden kann.

Die Komponenten IV.a. und IV.b. werden im Gewichtsverhältnis 50 bis 90 : 50 bis 10, vorzugsweise 60 bis 80 : 40 bis 20, eingesetzt.

Die Innenschicht gemäß V. enthält insbesondere Polyvinylidenfluorid, welches bevorzugt weichmacherfrei eingesetzt wird. Herstellung und Struktur des Polymeren sind bekannt. (Hans R. Kricheldorf, **Handbook of Polymer Synthesis**, Part A, Verlag Marcel Dekker Inc. New York - Basel - Hongkong, S. 191 f.; **Kunststoff Handbuch**, 1. Auflage, Band XI, Carl Hanser Verlag München (1971), S. 403 ff.).

Es können auch Polymere auf Basis von Polyvinylidenfluorid erfindungsgemäß enthalten sein, die bis zu 40 Gew.-% andere Monomere aufweisen. Als solche zusätzlichen Monomere seien beispielhaft genannt: Trifluorethylen, Ethylen, Propen und Hexafluorpropen.

Das eingesetzte erfindungsgemäße Polyvinylidenfluorid weist in der Regel einen Melt Flow-Index von < 17 g/10 min., vorzugsweise von 2 bis 13 g/10 min. (DIN 53 735) auf.

Den Formmassen für die Schichten gemäß I. bis V. können übliche Hilfs- und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Fertigung der mehrschichtigen Rohre erfolgt in bekannter, wie z. B. weiter oben im Stand der Technik beschriebenen Weise. Bevorzugt werden die Rohre auf dem Wege der Coextrusion hergestellt.

Bevorzugt sind erfindungsgemäße mehrschichtige Rohre, bei denen die Innenschicht gemäß V. elektrisch leitfähig eingestellt ist. Eine gute elektrische Leitfähigkeit wird durch Zugabe von bis zu 15 Gew.-% von z. B. Leitfähigkeitsruß, Kohlenstoffasern o. ä. erreicht.

Bei einem erfindungsgemäßen mehrschichtigen Rohr mit einem Außendurchmesser von 8 mm und einer Gesamtwandstärke von 1 mm können die Schichtdicken beispielsweise von außen nach innen 0,70 mm, 0,05 mm, 0,10 mm, 0,05 mm, 0,10 mm betragen. Erfindungsgemäß sind auch andere Schichtdickenverteilungen denkbar, beispielsweise mit einer dickeren Innenschicht von z. B. 0,3 mm.

Die erfindungsgemäßen mehrschichtigen Rohre weisen in hervorragendem Maße eine gute Beständigkeit sowie gute Sperrwirkung gegen Diffusion gegenüber (petro)chemischen Stoffen, Lösemitteln und Kraftstoffen auf. Ferner sind die benachbarten Schichten kraftschlüssig miteinander verbunden, so daß es z. B. bei thermischer Ausdehnung oder Biegen eines Rohres kein Abscheren der benachbarten Schichten von einander auftritt.

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff. Eine weitere Verwendung der mehrschichtigen Rohre besteht darin, daß aus ihnen Hohlkörper wie Tankbehälter oder Einfüllstützen, insbesondere für den Kraftfahrzeugsektor, hergestellt werden.

Die genannten Parameter wurden mit Hilfe nachstehender Meßverfahren bestimmt.

Die **Bestimmung der Lösungsviskosität** (rel. Viskosität $\eta_{rel}$) **der Polyamide** erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728 / ISO 1628/5 - Teil 5.

Für die **Bestimmung der Isocyanatgruppen** werden 6 g der Komponente II. (Polyester, Isocyanat) bei 180 °C in einem Gemisch aus Dichlorbenzol/Dibutylamin (80 : 20 Vol.-%) gelöst. Die Lösung wird bei 20 °C mit 10 %-iger Salzsäure gegen Bromphenol als Indikator titriert (DIN 53 185).

Die **Bestimmung des Melt Flow-Index der Poly(alkyl)acrylsäureester** erfolgt bei 230 °C und unter einer Belastung von 3,8 kg (DIN 53 735).

Die **Bestimmung des Melt Flow-Index der Polyvinylidenfluoride** erfolgt bei 230 °C und unter einer Belastung von 5 kg (DIN 53 735).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M 15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.-

## Beispiele

### A. Komponente I.

**PA 1:** Polyamid 12 ( $_{rel}$: 2,1; Weichmachergehalt: 0; Aminoendgruppengehalt: 9 mmol/kg; Carboxylendgruppengehalt: 48 mmol/kg; VESTAMID® L 2140 - HÜLS AG)

**PA 2:** Polyamid 12 ( $_{rel}$: 2,1; Weichmachergehalt auf 100 Gew.-Tl. Polyamid: 15 Gew.-Tl. N-n-Butylbenzolsulfonamid; Aminoendgruppengehalt: 9 mmol/kg; Carboxylendgruppengehalt: 48 mmol/kg; VESTAMID® L 2124 - HÜLS AG)

**PA 3:** Polyamid 12 ( $_{rel}$: 2,1; Weichmachergehalt: 0; 50 mmol/kg Aminoendgruppen; 8 mmol/kg Carboxylengruppen)

**PA 4:** Polyamid 12 ( $_{rel}$: 2,1; Weichmachergehalt auf 100 Teile Polyamid: 15 Gew.-Tl. N-n-Butylbenzolsulfonamid; 50 mmol/kg Aminoendgruppen; 8 mmol/kg Carboxylendgruppen)

**B. Komponente II.**

**B 1:** Polybutylenterephthalat (J-Wert: 165 cm /g; NCO-Gehalt = 0; VESTODUR® 3000 - HÜLS AG)

**B 2:** Mischung aus

a. 98 Gew. -% Polybutylenterephthalat (J-Wert: 115 cm /g; VESTODUR® 1000 - HÜLS AG) und

b. 2 Gew.-% einer Mischung bestehend aus

b.1 50 Gew.-% einer Verbindung, die aus 2 mol Isophorondiisocyanat und 1 mol Diethylenglykol hergestellt wurde, wobei die Verbindung jeweils über eine Urethanbindung erfolgte und die verbleibenden NCO-Gruppen mit Caprolactam blockiert sind, und

b.2 50 Gew.-% Isocyanurat des Isophorondiisocyanats (VESTANAT® T 1890 - HÜLS AG)

NCO-Gruppen-Konzentration in Komponente II.: 0,08 Gew.-%

**B 3:** Mischung aus

a. 96 Gew.-% Polybutylenterephthalat (J-Wert: 115 cm /g; VESTODUR® 1000 - HÜLS AG) und

b. 4 Gew.-% einer Mischung bestehend aus

b.1. 50 Gew.-% einer Verbindung, die aus 2 mol Isophorondiisocyanat und 1 mol Diethylenglykol hergestellt wurde, wobei die Verbindung jeweils über eine Urethanbindung erfolgte und die verbleibenden NCO-Gruppen mit Caprolactam blockiert sind, und

b.2. 50 Gew.-% Isocyanurat des Isophorondiisocyanats (VESTANAT® T 1890 - HÜLS AG)

NCO-Gruppen-Konzentration in Komponente II.: 0,16 Gew.-%

**B 4:** Mischung aus

a. 97 Gew.-% Polybutylenterephthalat (J-Wert: 115 cm /g; VESTODUR® 1000 - HÜLS AG) und

b. 3 Gew.-% einer Mischung bestehend aus

b.1. 40 Gew.-% Isophorondiisocyanat, blockiert mit Caprolactam, und

b.2. 60 Gew.-% Isocyanurat des Isophorondiisocyanats, wobei die verbleibenden NCO-Gruppen mit Caprolactam blockiert sind.

NCO-Gruppen-Konzentration in Komponente II.: 0,18 Gew.-%

**C. Komponente III.**

(s. unter Komponente I.)

**D. Komponente IV.**

**D 1:** Mischung aus

a. 70 Gew.-Tl. Polyamid 12 ( $_{rel}$: 2,1; Weichmachergehalt: 0; Aminoendgruppen: 9 mmol/kg; Carboxylendgruppen: 48 mmol/kg; VESTAMID® L 2140 - HÜLS AG) und

b. 30 Gew.-Tl. eines Polymeren (Melt Flow-Index: 0,4 g/10 min.) aufgebaut aus nachstehenden Grundbausteinen

i) 55 Gew.-%

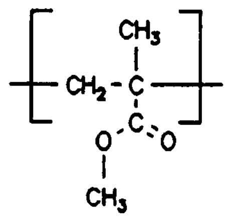

ii) 30 Gew.-%

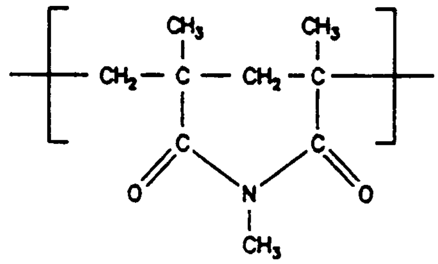

iii) 5 Gew.-%

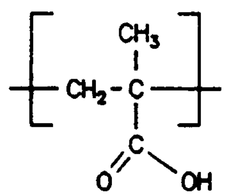

iv) 10 Gew.-%

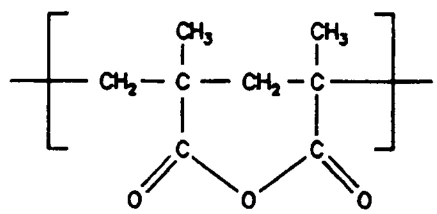

**D 2:** Mischung aus

a. 50 Gew.-Tl. Polyamid 12 ($\eta_{rel}$: 2,1; Weichmachergehalt: 0; Aminoendgruppen: 9 mmol/kg; Carboxylendgruppen: 48 mmol/kg; VESTAMID L 2140, HÜLS AG)

und

b. 50 Gew.-Tl. eines Polymeren (Melt Flow-Index: 0,4 g/10 min.) aufgebaut aus nachstehenden Grundbausteinen

i) 55 Gew.-%

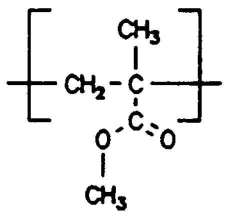

ii) 30 Gew.-%

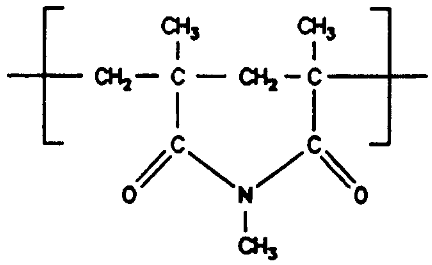

iii) 5 Gew..-%

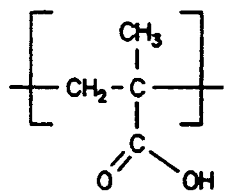

iv) 10 Gew.-%

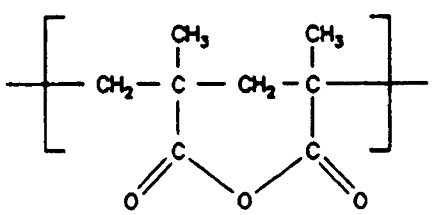

**E. Komponente V.**

**PVDF 1:** Polyvinylidenfluorid (Melt Flow-Index: 13 g/10 min., DYFLOR® LE - HÜLS AG)

**PVDF 2**: Polyvinylidenfluorid (Melt Flow-Index: 8,5 g/10 min.; 6 Gew.-Tl. handelsüblicher Leitfähigkeitsruß auf 100 Gew.-Tl. PVDF; DYFLOR® EE - HÜLS AG)

**F. Herstellung der mehrschichtigen Rohre**

Die Rohre werden auf einer Laborextrusionsanlage mit einem Fünfschichtwerkzeug hergestellt. Die Zylindertemperaturen lagen bei 230 °C (PA 1, PA 2, PA 3, PA 4), 250 °C (PVDF 1, PVDF 2, B 1, B 2, B 3, B 4), 260 °C (D 1, D 2).

Die Schichtdicken der Fünfschichtrohre betragen von außen nach innen: 0,65 mm; 0,08 mm; 0,10 mm; 0,07 mm; 0,10 mm.

**G. Tabelle**

| Versuch | Außenschicht | Zwischenschichten | | | Innenschicht | Diffusion [g/d m²] bei 23 °C | Benachbarte Schichten mechanisch trennbar nach Lagerung in Kraftstoff*) |
|---|---|---|---|---|---|---|---|
| | I. | II. | III. | IV. | V. | | |
| A | PA 1 | PA 1 | PA 1 | PA 1 | PA 1 | 30 | nein |
| B | PA 2 | PA 2 | PA 2 | PA 2 | PA 2 | 90 | nein |
| C | PA 2 | B 1 | PA 2 | D 1 | PVDF 1 | 0,8 | ja (II. von III. und II. von I.) |
| D | PA 1 | B 2 | PA 1 | PA 1 | PVDF 1 | 0,7 | ja (IV. von V.) |
| 1 | PA 3 | B 2 | PA 3 | D 1 | PVDF 1 | 0,7 | nein |
| 2 | PA 4 | B 2 | PA 4 | D 1 | PVDF 2 | 0,8 | nein |
| 3 | PA 3 | B 3 | PA 3 | D 2 | PVDF 1 | 0,7 | nein |
| 4 | PA 4 | B 4 | PA 4 | D 2 | PVDF 2 | 0,8 | nein |

*) Lagerung bei 23 °C während 5 Tagen in Normalkraftstoff M 15

## Patentansprüche

1. Mehrschichtiges Kunststoffrohr, dadurch gekennzeichnet,

daß es mindestens besteht aus

I. einer Außenschicht aus einer Formmasse auf Basis von Polyamid,

II. einer zur Außenschicht benachbarten Zwischenschicht aus einer Formmasse auf Basis eines Gemisches aus

a. 95 bis 99 Gew.-% eines linearen, kristallinen Polyesters

und

b. 1 bis 5 Gew.-% einer mindestens zwei Isocyanatgruppen aufweisenden Verbindung,

wobei die der Komponente II.b. entstammmenden Isocyanatgruppen in dem Gemisch aus II.a. und II.b. in einer Konzentration von 0,03 bis 0,3 Gew.-% enthalten sind,

III. einer Zwischenschicht aus einer Formmasse auf Basis von Polyamid,

IV. einer zur Innenschicht benachbarten Zwischenschicht aus einer Formmasse auf Basis eines Gemisches aus

a. 50 bis 90 Gew.-% eines Polyamids

und

b. 10 bis 50 Gew.-% eines Poly(alkyl)acrylsäureesters

V. einer Innenschicht aus einer Formmasse auf Basis von Polyvinylidenfluorid,

wobei die jeweils benachbarten Schichten kraftschlüssig miteinander verbunden sind.

**2.** Mehrschichtiges Kunststoffrohr nach Anspruch 1,
dadurch gekennzeichnet,
daß bei dem in der Schicht I. bzw. III. enthaltenen Polyamid mindestens 50 Gew.-% aller vorhandenen Endgruppen Aminoendgruppen sind.

**3.** Mehrschichtiges Kunststoffrohr nach den Ansprüchen 1 und 2,
dadurch gekennzeichnet,
daß die Zwischenschicht gemäß II. eine Formmasse auf Basis eines Gemisches aus

a. 96 bis 98 Gew.-% eines linearen, kristallinen Polyesters

und

b. 2 bis 4 Gew.-% einer mindestens zwei Isocyanatgruppen aufweisenden Verbindung

enthält.

**4.** Mehrschichtiges Kunststoffrohr nach den Ansprüchen 1 bis 3,
dadurch gekennzeichnet,
daß die der Komponente II.b. entstammenden Isocyanatgruppen in dem Gemisch aus II.a. und II.b. in einer Konzentration von 0,04 bis 0,2 Gew.-% enthalten sind.

**5.** Mehrschichtiges Kunststoffrohr nach den Ansprüchen 1 bis 4,
dadurch gekennzeichnet,
daß die Komponente II.b. ein Gemisch aus einer zwei Isocyanatgruppen und einer mehr als zwei Isocyanatgruppen aufweisenden Verbindung enthält.

**6.** Mehrschichtiges Kunststoffrohr nach den Ansprüchen 1 bis 5,
dadurch gekennzeichnet,
daß die Komponente II.b. Isophorondiisocyanat oder eine daraus durch Umsetzung mit sich selbst oder mit Diolen abgeleitete Verbindung enthält.

**7.** Mehrschichtiges Kunststoffrohr nach den Ansprüchen 1 bis 6,
dadurch gekennzeichnet,
daß die Komponente II.b. ein aus Isophorondiisocyanat abgeleitetes Isocyanurat enthält.

**8.** Mehrschichtiges Kunststoffrohr nach den Ansprüchen 1 bis 7,
dadurch gekennzeichnet,
daß das die in der Komponente II.b. enthaltene Verbindung durch Lactam blockierte Isocyanatgruppen aufweist.

**9.** Mehrschichtiges Kunststoffrohr nach den Ansprüchen 1 bis 8,
dadurch gekennzeichnet,
daß die Zwischenschicht gemäß IV. eine Formmasse auf Basis eines Gemisches aus

a. 60 bis 80 Gew.-% eines Polyamids
und
b. 20 bis 40 Gew.-% eines Poly(alkyl)acrylsäureesters
enthält.

**10.** Mehrschichtiges Kunststoffrohr nach den Ansprüchen 1 bis 9,
dadurch gekennzeichnet,
daß die Komponente IV.b. ein Copolymeres aus Methylmethacrylat, Styrol und Maleinsäureanhydrid darstellt.

**11.** Mehrschichtiges Kunststoffrohr nach den Ansprüchen 1 bis 9,
dadurch gekennzeichnet,
daß die Komponente IV.b. nachstehende Grundbausteine aufweist:
i) < 100 Gew.-%

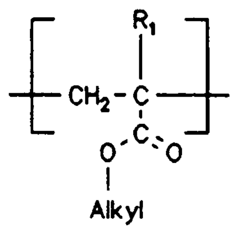

ii) < 100 Gew.-%

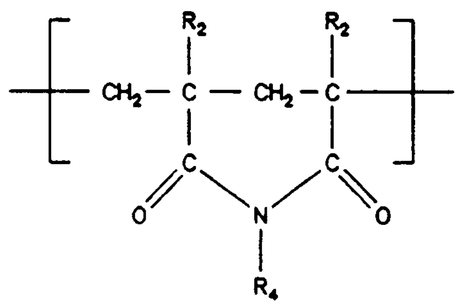

iii) < 20 Gew.-%

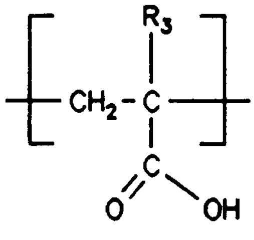

iv) < 20 Gew.-%

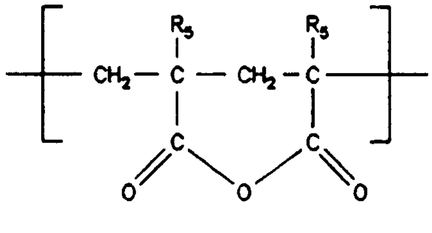

wobei Alkyl = Methyl, Ethyl, Propyl, Butyl, Hexyl
$R_1$ bis $R_5$ = -H, $-(C_nH_{2n+1})$
n = 1 bis 6 bedeuten
und die Substituenten gleich oder verschieden sein können.

**12.** Mehrschichtiges Kunststoffrohr nach den Ansprüchen 1 bis 9,
dadurch gekennzeichnet,
daß die Komponente IV.b. nachstehende Grundbausteine aufweist:

i) 6,5 bis 60 Gew.-%

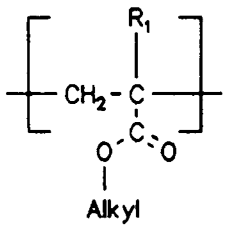

ii) 20 bis 90 Gew.-%

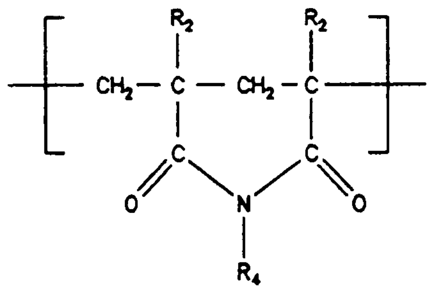

iii) 2 bis 15 Gew.-%

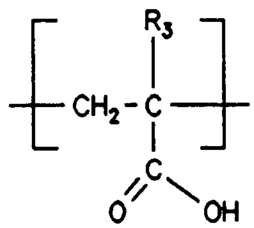

iv) 1,5 bis 12 Gew.-%

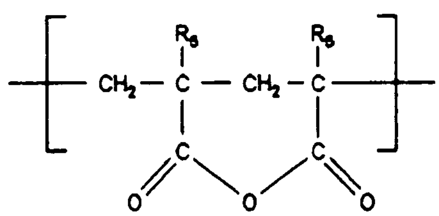

wobei Alkyl = Methyl, Ethyl, Propyl, Butyl, Hexyl
$R_1$ bis $R_5$ = -H, $-(C_nH_{2n+1})$
n = 1 bis 6 bedeuten
und die Substituenten gleich oder verschieden sein können.

13. Mehrschichtiges Kunststoffrohr nach Anspruch 11 und 12,
dadurch gekennzeichnet,
daß Alkyl sowie $R_1$ bis $R_5$ eine Methylgruppe darstellen.

14. Mehrschichtiges Kunststoffrohr nach den Ansprüchen 1 bis 13,
dadurch gekennzeichnet,
daß die Innenschicht gemäß V. eine Formmasse auf Basis eines Polyvinylidenfluorids mit einem Melt Flow-Index von < 17 g/10 min. enthält.

15. Mehrschichtiges Kunststoffrohr nach den Ansprüchen 1 bis 14,
dadurch gekennzeichnet,
daß die Innenschicht gemäß V. eine Formmasse auf Basis eines Polyvinylidenfluorids mit einem Melt Flow-Index von 2 bis 13 g/10 min. enthält.

16. Mehrschichtiges Kunststoffrohr nach den Ansprüchen 1 bis 15,
dadurch gekennzeichnet,
daß die Innenschicht gemäß V. eine Formmasse auf Basis eines Polyvinylidenfluoridcopolymeren enthält.

17. Mehrschichtiges Kunststoffrohr gemäß den Ansprüchen 1 bis 16,
dadurch gekennzeichnet,
daß die Innenschicht gemäß V. elektrisch leitfähig eingestellt ist und einen Oberflächenwiderstand von $< 10^9\ \Omega$ aufweist.

18. Verwendung des mehrschichtigen Kunststoffrohres nach den Ansprüchen 1 bis 17 für den Transport (petro)chemischer Stoffe.

19. Verwendung des mehrschichtigen Kunststoffrohres nach den Ansprüchen 1 bis 17 auf dem Kraftfahrzeugsektor zum Durchleiten von Brems-, Kühl- und Hydraulikflüssigkeiten sowie Kraftstoff.

20. Verwendung des mehrschichtigen Kunststoffrohres nach den Ansprüchen 1 bis 17 zur Herstellung von Hohlkörpern.

21. Verwendung des mehrschichtigen Kunststoffrohres nach den Ansprüchen 1 bis 17 zur Herstellung von Einfüllstutzen oder Tankbehältern im Kraftfahrzeugsektor.

Europäisches Patentamt

# EUROPÄISCHER RECHERCHENBERICHT

Nummer der Anmeldung
EP 94 10 0431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 542 184 (HÜLS AG)<br>* Seite 3, Zeile 46 - Seite 4, Zeile 19; Ansprüche 1-3,6,8,11,12 * | 1-13, 16-21 | F16L9/12<br>B32B27/34<br>B32B1/08<br>F16L11/04<br>C08L77/00<br>C08L33/24<br>//C08L77/00, C08L33/24, (C08L77/00, 33:24) |
| Y | EP-A-0 523 644 (CENTRAL GLASS COMPANY)<br>* Seite 2, Zeile 10 - Zeile 22; Ansprüche 1,6,7 *<br>* Seite 3, Zeile 3 - Zeile 9 *<br>* Seite 4, Zeile 25 - Zeile 29 * | 1-8,16, 18-21 | |
| Y | RESEARCH DISCLOSURE<br>Nr. 321 , Januar 1991 , EMSWORTH , GB<br>Seiten 68A - 68B<br>'Control of functionality in glutarimide polymers' | 9-13 | |
| Y | EP-A-0 551 094 (PILOT INDUSTRIES, INC.)<br>* Seite 3, Zeile 26 - Seite 4, Zeile 26; Ansprüche 1,2,4,6,7,10; Abbildung 2 *<br>* Seite 4, Zeile 17 - Seite 5, Zeile 12 *<br>* Seite 7, Zeile 15 - Zeile 28 * | 1-8, 17-21 | **RECHERCHIERTE SACHGEBIETE (Int.Cl.6)** |
| P,Y | EP-A-0 569 681 (HÜLS AG)<br>* Seite 2, Zeile 28 - Zeile 42; Ansprüche 1-5; Beispiele * | 1-8, 18-21 | F16L<br>C08L<br>B32B |
| P,Y | EP-A-0 569 683 (HÜLS AG)<br>* das ganze Dokument * | 1-8, 18-21 | |
| Y | EP-A-0 509 212 (HÜLS AG)<br>* Ansprüche 1,8,9; Beispiel Z3 * | 1-4,6,8, 18-21 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 25. August 1994 | Derz, T |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung
EP 94 10 0431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,A | EP-A-0 567 947 (EMS-INVENTA AG)<br>* Seite 3, Zeile 18 - Zeile 30; Ansprüche 1,3-5,8,9,13 *<br>----- | 10 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 25. August 1994 | Derz, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)